# EUROPEAN PATENT APPLICATION

(11) **EP 4 170 614 A1**
(43) Date of publication of application: **26.04.2023**
(21) Application number: 21306469.4
(22) Date of filing: 21.10.2021
(51) Int. Cl.: G07F 7/08, G07F 7/10, G06Q 20/34, G06V 40/13

(54) **METHOD FOR MANAGING A CARD**

(71) Applicant: Thales Dis France SAS, 92190 Meudon (FR)
(72) Inventor: SALLES, Jean-Luc, 92190 MEUDON (FR); LELOUP, Laurent, 92190 MEUDON (FR); SOUCHON, Pierre, 92190 MEUDON (FR)
(74) Representative: Grevin, Emmanuel

(57) **Abstract**

The invention is a method for managing a card (10) comprising a fingerprint sensor (40), first and second options (11, 12) and wherein the method comprises the steps:
- During a treatment of a biometric data captured by the fingerprint sensor when a user (30) presents a finger to the fingerprint sensor during a transaction, identifying an orientation of said finger in relation to the fingerprint sensor;
- Selecting, by the card, among said first and second options, a chosen option that had been assigned to said orientation; and
- Using, by the card, the chosen option for the transaction.

## Description

### (Field of the invention)

The present invention relates to methods for managing a card. It relates particularly to methods of selecting an option or a configuration in a contactless smart card.

### (Background of the invention)

Smart cards are portable small devices comprising a memory, a microprocessor and an operating system for computing treatments. They may comprise services applications like payment applications. Such secure elements may comprise a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components. In general, smartcards have limited computing resources and limited memory resources and they are intended to connect a host machine which provides them with electric power either in contact mode or contactless mode.

Contactless smart cards are designed to communicate according to at least one contactless protocol.

A contactless card which is coupled to a contactless reader may execute one or more operations for performing a transaction with the reader. Some transactions may be customized by selecting one option (or configuration) among a plurality of available options.

The reader may display the list of available options so that the cardholder may select the most appropriate one using the user input interface (like a keyboard or a button) of the reader.

Such a sequence is convenient when the card is inserted in the reader to communicate using a contact protocol, like ISO7816 T=0 or T=1 communication protocols. However, such a sequence cannot be used for a card communicating with the reader through a contactless protocol wherein the user just taps (i.e. places the card near) the reader for activating the transaction.

### (Summary of the Invention)

There is need to enhance the way to select an option in a smart card.

The invention aims at solving the above mentioned technical problem.

An object of the present invention is a method for managing a card comprising a fingerprint sensor. The card comprises first and second options. The method comprises the steps of:
- During a treatment of a biometric data captured by the fingerprint sensor when a user presents a finger to the fingerprint sensor during a transaction, identifying an orientation of said finger in relation to the fingerprint sensor; then
- Selecting, by the card, among said first and second options, a chosen option that had been assigned to said orientation; then
- Using, by the card, the chosen option for the transaction.

Advantageously, the card may be a payment card and the first option may be a debit payment and the second option may be a credit payment.

Advantageously, the card may comprise a matching engine configured to perform a comparison of the biometric data with a pre-registered biometric pattern and the orientation may be identified by the matching engine.

Advantageously, the card may use the chosen option for the transaction only if the comparison is successful.

Advantageously, the matching engine may compute a first reference axis of the biometric data and may compute a second reference axis of the pre-registered biometric pattern. The matching engine may identify the orientation by comparing said first and second reference axes.

Advantageously, the matching engine may select the chosen option by taking into account a preset deviation tolerance between said first and second reference axes.

Advantageously, the matching engine may identify the orientation by computing an angle of rotation of the finger with respect to a reference axis of the fingerprint sensor.

Another object of the present invention is a card comprising a fingerprint sensor, first and second options, a processor and instructions which cause said card to:
- During a treatment of a biometric data captured by the fingerprint sensor, identify an orientation of said finger in relation to the fingerprint sensor;
- Select, among said first and second options, a chosen option that had been assigned to said orientation; and
- Use the chosen option for the transaction.

Advantageously, the card may be a payment card and said first option may be a debit payment and said second option may be a credit payment.

Advantageously, the card may include a matching engine which is configured to perform a comparison of the biometric data with a pre-registered biometric pattern and the matching engine may be configured to identify the finger orientation.

Advantageously, the card may be configured to use the chosen option for the transaction only if the comparison is successful.

Advantageously, the matching engine may be configured to compute a first reference axis of the biometric data and a second reference axis of the pre-registered biometric pattern and the matching engine may be configured to identify the orientation by comparing said first and second reference axes.

Advantageously, the matching engine may be configured to select the chosen option by taking into account a preset deviation tolerance between said first and second reference axes.

Advantageously, the matching engine may be configured to identify the orientation by computing an angle of rotation of the finger with respect to a reference axis of the fingerprint sensor.

Advantageously, the card may comprise a body and a first message referring to said first option may be written on the body and may indicate which finger orientation corresponds to the first option.

### (Brief description of the drawings)

Other characteristics and advantages of the present invention will emerge more clearly from a reading of the following description of a number of preferred embodiments of the invention with reference to the corresponding accompanying drawings in which:
Fig. 1 shows a first exemplary flow diagram for managing selection of an option in a contactless smart card according to an example of the invention;
Fig. 2 shows a diagram of architecture of a contactless card according to an example of the invention;
Fig. 3 shows a detail of the body of the card showing particular inscriptions intended to guide the user according to an example of the invention;
Fig. 4 shows the selection of a first payment option according to an example of the invention;
Fig. 5 shows the selection of a second payment option according to an example of the invention; and
Fig. 6 shows the selection of a third payment option according to an example of the invention.

### (Detailed description of the preferred embodiments)

The invention may apply to any type of smart card embedding a biometric sensor. The invention may apply to contact cards and to contactless cards. The biometric card may be a banking card, a ticket providing access to a mass transit, an access badge or an identity document for instance.

The invention is well-suited for cards which are designed to communicate through at least one contactless protocol. The invention also applies to cards which are designed to communicate through both contact and contactless protocols.

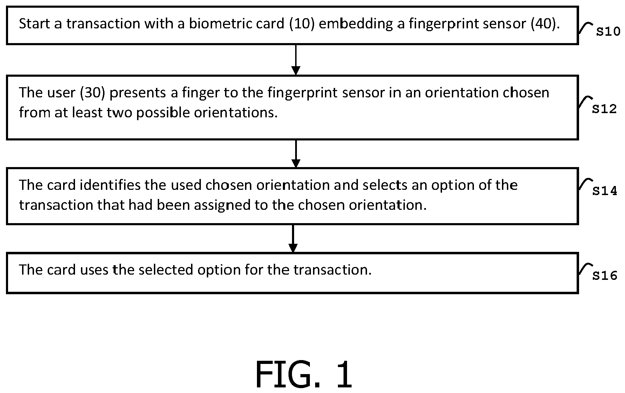

Figure 1 depicts a first exemplary flow diagram for managing selection of an option in a contactless smart card according to an example of the invention.

In this example, the contactless card 10 is a biometric banking card intended to be used by its associated user (i.e. bank customer) for payment or cash withdrawal.

The banking card 10 has a contactless communication interface and embeds a fingerprint sensor 40 designed to capture fingerprint data. The banking smart card may embed a controller coupled to the biometric sensor and configured to get data captured by the sensor and to apply treatments on the captured data. For instance, the controller may be a microcontroller unit (MCU) which is configured to perform an anti-spoofing algorithm to detect fraud attempts based on a fake fingerprint system and/or configured to extract remarkable items from the biometric data captured by the sensor. The banking card embeds a secure element comprising a hardware processing unit, memory and an operating system designed to contribute to bank services. The secure element may be configured to communicate with the controller. The secure element may be configured to act as a controller of the biometric sensor. The banking smart card may comprise a reference biometric pattern which has been enrolled by the user (i.e. bank customer).

The card embeds at least first and second options (I.e. configuration parameters) which may be used to configure a transaction involving the card or to configure an application stored in the card and intended to contribute to a transaction.

At step S10, a transaction starts with the biometric card 10. The transaction needs that the cardholder 30 (I.e. user of the card) presents a finger to the fingerprint sensor of the card.

At step S12, the cardholder 30 presents a finger to the fingerprint sensor 40. The finger can be placed on the surface of the fingerprint sensor, or placed near the sensor 40. The finger is positioned according to a chosen orientation which is selected from at least two possible finger orientations. Each possible finger orientations uniquely corresponds to an option. For instance, the first orientation may correspond to the "credit payment" option while the second orientation may correspond to the "debit payment" option.

At step S14, the card identifies the chosen orientation and selects the option that had been assigned to the chosen orientation. The card may assess the finger orientation in relation to the fingerprint sensor.

In a next step S16, the card may use the selected option for participating to the transaction. For instance, if the user has positioned their finger according to the first orientation, the card may authorize a credit payment.

The card may directly use the selected option to perform computation(s) required by the transaction or send an identifier of the selected option to the reader which in turn may execute a treatment which uses the selected option as input parameter.

Thus, the card is adapted to dynamically take the action of the cardholder into account so as to select the desired option (or configuration) required for performing the transaction.

In some embodiments, the card comprises a matching engine which is configured to perform a comparison of a biometric data (captured by the sensor) with a pre-registered biometric pattern stored in the card. The matching engine may be configured to identify the orientation.

In some embodiments, the card may use the chosen option for the transaction only if the comparison between the captured biometric data and the pre-registered biometric pattern is successful.

In some embodiments, the matching engine may compute a first reference axis of the captured biometric data and a second reference axis of the pre-registered biometric pattern. Then the matching engine may identify the chosen (finger) orientation by comparing the first reference axis with the second reference axis. In this case, the orientation of the finger is determined by the result of a comparison between the orientation of a biometric data that the fingerprint sensor has just captured and an orientation of a reference pattern pre-recorded by the sensor during an enrollment phase. In other word, the matching engine may use as a reference the orientation that the finger had during the enrollment step and compute the difference in rotation between the axis of the newly acquired biometric data and the axis of the enrolled reference pattern to deduce the orientation in which the user has just placed the finger.

In some embodiments, the matching engine may select the chosen option by taking into account a preset deviation tolerance between the first reference axis and the second reference axis. For instance, the deviation tolerance may be in the range [-30 to +30 degrees].

In some embodiments, the matching engine may identify the orientation (of the presented finger) by computing an angle of rotation of the finger with respect to a reference axis of the fingerprint sensor itself. Thus by analyzing the captured biometric data (without match operation), some parameters like the length or width of the acquired image or the position of specific remarkable biometric items into the captured data may be used to deduce the orientation in which the user has just placed the finger.

Although the method has been described for a contactless banking card at Figure 1, some embodiments of the invention may apply to other types of smart card. For example, the card may be an access control badge.

A first orientation may be assigned to an option allowing to use high security features (to access highly secure areas), while a second orientation may be assigned to an option allowing to use medium security features (to access normal areas). A third orientation may even be assigned to an option allowing to trigger an alarm indicating that the transaction was carried out under duress.

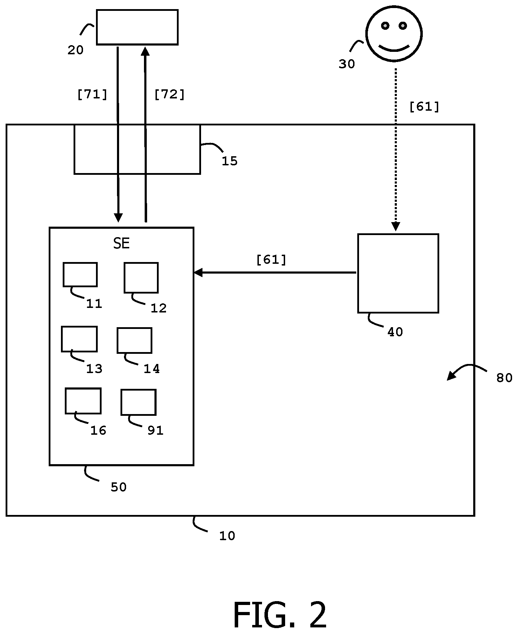

Figure 2 depicts a diagram of architecture of a contactless card according to an example of the invention.

In this example, the contactless card 10 is a banking smart card allocated to a user 30.

The biometric card 10 comprises a body 80, a secure chip 50 (also called secure element) and a fingerprint sensor 40 connected to the secure chip. The smart card 10 comprises a communication interface 15 which is designed to exchange data with outside in contactless mode. The communication interface 15 is linked to the secure element 50.

The secure chip 50 comprises a processor and a non-volatile memory (not shown). The non-volatile memory stores an operating system which includes software instructions that are executed by the processor to perform the features of the secure chip.

In the example of Figure 2, the card 10 is coupled to a reader 20 which may be embedded in a Point-Of-Sale (POS) device and the secure element 50 is a conventional smart card chip with additional features. The secure element 50 is able to contribute to a banking transaction with an external machine. For instance, the transaction may be a payment transaction or cash withdrawal. The secure element 50 may comprise a reference biometric data 91 previously enrolled by the user 30.

The secure element 50 may comprise a biometric algorithm 16 (matching algorithm) aiming at comparing the reference biometric data 91 with a biometric data 61 captured by the sensor 40.

The card comprises at least two options (or configuration data). In the example of Figure 2, the card 10 comprises three options 11, 12 and 13.

The card is configured to receive a request 71 (from the reader) which belong to a transaction and to generate and send a message 72 in response to the request 71. The content of the message 72 may depend on the option selected by the cardholder.

During a treatment of a biometric data captured by the fingerprint sensor 40, the secure element 50 is configured to identify the orientation of the presented finger in relation to the fingerprint sensor. The secure element 50 is configured to select, among the available options, the chosen option that had been assigned to the identified orientation and to use the chosen option for the transaction.

In some embodiments, the card may be a payment card, and one option may be a debit payment and another option may be a credit payment.

In some embodiments, the card comprises a matching engine configured to perform a comparison of a captured biometric data 61 with the pre-registered biometric pattern 91. The matching engine may be configured to identify the orientation (of the presented finger) based on both the captured biometric data 61 and the pre-registered biometric pattern 91. The matching engine may be implemented in the secure element by a specific set of software instructions.

In some embodiments, the card may be configured to use the chosen option for the transaction only if the comparison between the captured biometric data 61 and the pre-registered biometric pattern 91 is successful.

In some embodiments, the matching engine is configured to compute a first reference axis of the biometric data and a second reference axis of the pre-registered biometric pattern and to identify the orientation (of the presented finger) by comparing these two reference axes.

In some embodiments, the matching engine may select the chosen option by taking into account a preset deviation tolerance between the reference axis of the biometric data and the reference axis of the pre-registered biometric pattern. For instance the orientation of the captured biometric data can be considered as corresponding to the orientation of the registered biometric pattern if the difference between the two axes is less than or equal to 15 or 36 degrees.

In some embodiments, the matching engine may be configured to identify the orientation of the presented finger by computing an angle of rotation of the finger with respect to a reference axis of the fingerprint sensor itself.

In some embodiments, the matching engine may be configured to select a preset default option if no finger orientation has been identified through the captured biometric data. Such a case may occur when the finger is placed in an orientation which does not correspond to the orientations assigned to available options in the card. For instance, a positioning of the finger at the limit of two main reference orientations may not be accepted as validly recognized, in particular because of the values of deviation tolerances.

In some embodiments, a first message referring to the first option 11 may be written on the body and indicates which finger orientation corresponds to the first option. Preferably, each finger orientation which is assigned to an option in the card may have a corresponding message written on the card body 80 to guide the cardholder. The message may contain a text, a pictogram, an icon or a symbol for example.

In some embodiments, the card may provide a feedback directly to the cardholder to indicate which option has been selected. For instance, the card body may include as many light sources (like a LED) as available configured orientations/options and turns on the light source associated with the selected orientation/option. The feedback may also be an audio signal.

In some embodiments, the card may provide a feedback indirectly to the cardholder by sending to the coupled reader 20 a reference of the selected option so that the reader may inform the cardholder of the selected option through its own man machine interface (like a display or a light source) or by printing a paper.

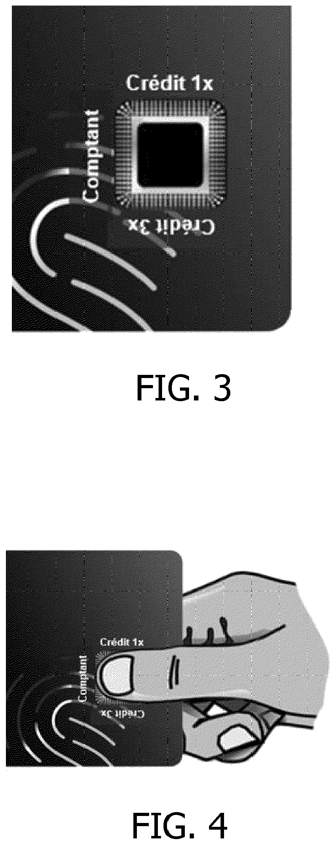

Figure 3 depicts a detail of the body of the card showing particular inscriptions intended to guide the user according to an example of the invention. In this example, the cardholder may select one option among three available options. The first orientation may correspond to a "debit payment" option, the second orientation may correspond to a "credit in 1 payment" option and the third orientation may correspond to a "credit in 3 payments" option.

When the "debit payment" option is selected, the payment transaction will result in deducting money directly from the bank account associated with the card.

When the "credit in 1 payment" option is selected, the payment transaction will result in opening a credit line so that money will be deducted at the end of the month.

When the "credit in 3 payments" option is selected, the payment transaction will result in opening a credit line so that money will be deducted in three times from the bank account associated with the card.

In the example of Figure 3, the message associated with the first option (i.e. with the first orientation) is "Comptant" (which stands for Debit payment in French), the message associated with the second option (i.e. with the second orientation) is "Credit 1x" and the message associated with the third option (i.e. with the third orientation) is "Credit 3x".

As shown at Figure 4 the cardholder has placed a finger according to the first orientation so as to select the "debit payment" option. Assuming that the user previously enrolled their finger by using this particular orientation, the difference between the orientation of the presented finger and that of the enrolled finger is small (a few degrees more or less).

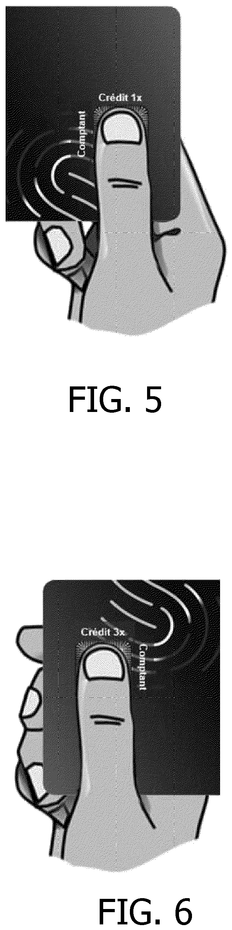

As shown at Figure 5 the cardholder has placed a finger according to the second orientation so as to select the "credit in 1 payment" option. Assuming that the user previously enrolled their finger by using the orientation corresponding to the first option (see Figure 4), the difference between the orientation of the presented finger and that of the enrolled finger is approximately 90 degrees (clockwise, with a tolerance of a few degrees more or less) .

As shown at Figure 6 the cardholder has placed their finger according to the third orientation so as to select the "credit in 3 payments" option. Assuming that the user previously enrolled their finger by using the orientation corresponding to the first option (see Figure 4), the difference between the orientation of the presented finger and that of the enrolled finger is approximately 270 degrees (clockwise, with a tolerance of a few degrees more or less) .

Thanks to some embodiments of the invention, it is possible to dynamically adapt the configuration of a transaction in response to the selection of an option by the cardholder.

Thanks to some embodiments of the invention, in a single action, the user may provide biometric data which are required to authenticate the cardholder (and to get cardholder's agreement for the transaction) and select an option to customize the transaction to be performed.

Thanks to some embodiments of the invention, the user may enroll a single finger in the card and select the wished option by using the enrolled finger. Since the user does not need to register several of their fingers, this avoids the laborious and time consuming step of enrolling a plurality of fingers in the card.

Thanks to some embodiments of the invention, the cardholder can smoothly select a configuration when the transaction happens through a contactless session between the card and a reader where only one tap is done by the cardholder.

The invention is not limited to the described embodiments or examples. In particular, the described examples and embodiments may be combined.

The invention is not limited to Banking smart cards and applies to any biometric smart cards allocated to a user.

The biometric smart card may embed a large number of options and the user may select any of these options by using some embodiments of the invention.

Although examples of the invention have been mainly provided in the banking domain, the invention also applies to other domains. For example, the smart card may provide access to a physical building, room or area.

## Claims

1. A method for managing a card (10) comprising a fingerprint sensor (40),
wherein the card comprises first and second options (11, 12) and wherein the method comprises the steps:
During a treatment of a biometric data captured by the fingerprint sensor when a user (30) presents a finger to the fingerprint sensor during a transaction, identifying an orientation of said finger in relation to the fingerprint sensor;
Selecting, by the card, among said first and second options, a chosen option that had been assigned to said orientation; and
Using, by the card, the chosen option for the transaction.

2. The method according to claim 1, wherein the card is a payment card and wherein said first option is a debit payment and said second option is a credit payment.

3. The method according to claim 1, wherein the card comprises a matching engine configured to perform a comparison of the biometric data with a pre-registered biometric pattern and wherein the orientation is identified by the matching engine.

4. The method according to claim 3, wherein the card uses the chosen option for the transaction only if the comparison is successful.

5. The method according to claim 3, wherein the matching engine computes a first reference axis of the biometric data and a second reference axis of the pre-registered biometric pattern and wherein the matching engine identifies the orientation by comparing said first and second reference axes.

6. The method according to claim 5, wherein the matching engine selects the chosen option by taking into account a preset deviation tolerance between said first and second reference axes.

7. The method according to claim 3, wherein the matching engine identifies the orientation by computing an angle of rotation of the finger with respect to a reference axis of the fingerprint sensor.

8. A card (10) comprising a fingerprint sensor (40), wherein said card comprises first and second options (11, 12), a processor and instructions which cause said card to:
During a treatment of a biometric data captured by the fingerprint sensor, identify an orientation of said finger in relation to the fingerprint sensor;
Select, among said first and second options, a chosen option that had been assigned to said orientation; and
Use the chosen option for the transaction.

9. The card according to claim 8, wherein the card is a payment card and wherein said first option is a debit payment and said second option is a credit payment.

10. The card according to claim 8, wherein the card comprises a matching engine configured to perform a comparison of the biometric data with a pre-registered biometric pattern and wherein the matching engine is configured to identify said orientation.

11. The card according to claim 10, wherein the card is configured to use the chosen option for the transaction only if the comparison is successful.

12. The card according to claim 10, wherein the matching engine is configured to compute a first reference axis of the biometric data and a second reference axis of the pre-registered biometric pattern and wherein the matching engine is configured to identify the orientation by comparing said first and second reference axes.

13. The card according to claim 12, wherein the matching engine selects the chosen option by taking into account a preset deviation tolerance between said first and second reference axes.

14. The card according to claim 10, wherein the matching engine is configured to identify the orientation by computing an angle of rotation of the finger with respect to a reference axis of the fingerprint sensor.

15. The card according to claim 8, wherein the card comprises a body and wherein a first message referring to said first option is written on the body and indicates which finger orientation corresponds to said first option.
